# EUROPEAN PATENT SPECIFICATION

(11) **EP 1 067 461 B1**
(45) Date of publication and mention of the grant of the patent: **24.04.2013**
(21) Application number: 99401721.8
(22) Date of filing: 08.07.1999
(51) Int. Cl.: G06F 13/16, G06F 15/167

(54) **Unified memory management system for multi process heterogeneous architecture**
Vereinheitlichtes Speicherverwaltungssystem für heterogene Multiprozessor-Architektur
Système de gestion de mémoire unifié pour architecture hétérogène multiprocesseur

(43) Date of publication of application: 10.01.2001
(73) Proprietor: TEXAS INSTRUMENTS FRANCE, 06271 Villeneuve Loubet Cédex (FR); Texas Instruments Incorporated, Dallas, TX 75251 (US)
(72) Inventor: Chauvel, Gérard, Villa Numéro 20, 06600 Antibes (FR); Lasserre, Serge, St. Jean de Cannes, 83600 Prejus (FR); D'Inverno, Dominique Benoît Jacques, 06270 Villeneuve Loubet (FR)
(74) Representative: Holt, Michael

(56) References cited:
- EP-A- 0 374 338
- EP-A- 0 380 855
- EP-A- 0 803 820
- GB-A- 2 171 542

## Description

### TECHNICAL FIELD OF THE INVENTION

This invention relates in general to electronic circuits and, more particularly, to digital signal processors.

### DESCRIPTION OF THE RELATED ART

Despite the increasing speed of processors, some emerging applications like video conferencing, digital cameras, and new standards in wireless communication supporting more efficient data communication, such as web browsing, will open up new services and therefore enormously increase the MIPS and parallelism requirement for devices. These applications might be executed in separate devices or combined together in the next generation of portable communicators. For these applications, low power consumption and short latency for real time operations are essential.

A single CPU solution with an integrated DSP function, which is the most appealing for the software development, does not seem to be the best trade-off in terms of power consumption and performance. Instead, a multi-processor architecture with heterogeneous processor including an MPU (micro-processor unit), one or several DSPs (Digital signal processors) as well as a co-processor or hardware accelerator and DMA provides significant advantages.

One shortcoming of DSPs is their memory I/O capabilities. Typically, the DSP has an internal memory upon which the DSP relies for storage of data and program information. While improvements in semiconductor fabrication have increased the amount of memory which can be integrated in a DSP, the complexity of the applications has increased the need for instruction and data memory even moreso.

In the future, applications executed by DSPs will be more complex and will likely involve multiprocessing by multiple DSPs in a single system. DSPs will evolve to support multiple, concurrent applications, some of which will not be dedicated to a specific DSP platform, but will be loaded from a global network such as the Internet. These DSP platforms will benefit from a RTOS (real time operating system) to schedule multiple applications and to support memory management to share and protect memory access efficiently between applications and operating system kernels.

Accordingly, a need has arisen for a DSP capable of sophisticated memory management.

GB 2 171 542 discloses a multiprocessor computer apparatus comprising a plurality of processor modules, each module having at least one processor and interface means through which data, addresses and vectored interrupts may be communicated, said processor modules also each including a cache memory for storing contents of frequently accessed memory locations; system memory having interfaces through which data and addresses may be communicated, said system memory being accessible to each of said processors; operation control means for allocating and controlling the operation of a plurality of processes; means for generating timing signals that define successive transaction intervals; and a system bus means connected to the interfaces.

### BRIEF SUMMARY OF THE INVENTION

Accordingly a processing system according to claim 1 and a method according to claim 11 are provided. Further embodiments of the invention are specified in the appended dependent claims.

Significant advantages are achieved over the prior art solutions, providing to processing devices such as DSPs, co-processors and DMA channels, with a linear memory space in which to execute independent tasks and the same level of memory protection commonly used in microprocessors. With control of the virtual to physical address translation , the unified memory management system running on a master processing unit can more effectively control the operation of one or more processing devices in a multiprocessor system.

### BRIEF DESCRIPTION OF THE SEVERAL VIEWS OF THE DRAWINGS

For a more complete understanding of the present invention, and the advantages thereof, reference is now made to the following descriptions taken in conjunction with the accompanying drawings, in which:
Figure 1a illustrates a block diagram of a DSP, MPU and co-processor coupled to an external main memory;
Figure 1b illustrates memory mapping between different devices and a shared memory;
Figure 2 illustrates a block diagram of the DSP of Figure la;
Figure 3 illustrates a table showing different bus usages for the DSP of Figure 2;
Figure 4 illustrates program and data spaces for the DSP of Figure 2;
Figure 5 illustrates a block diagram of the MMU;
Figure 6 illustrates the operation of the walking table logic for a section of the MMU;
Figure 7 illustrates a DMA channel driver; and
Figure 8 illustrates an initialization flow for the DSP.

### DETAILED DESCRIPTION OF THE INVENTION

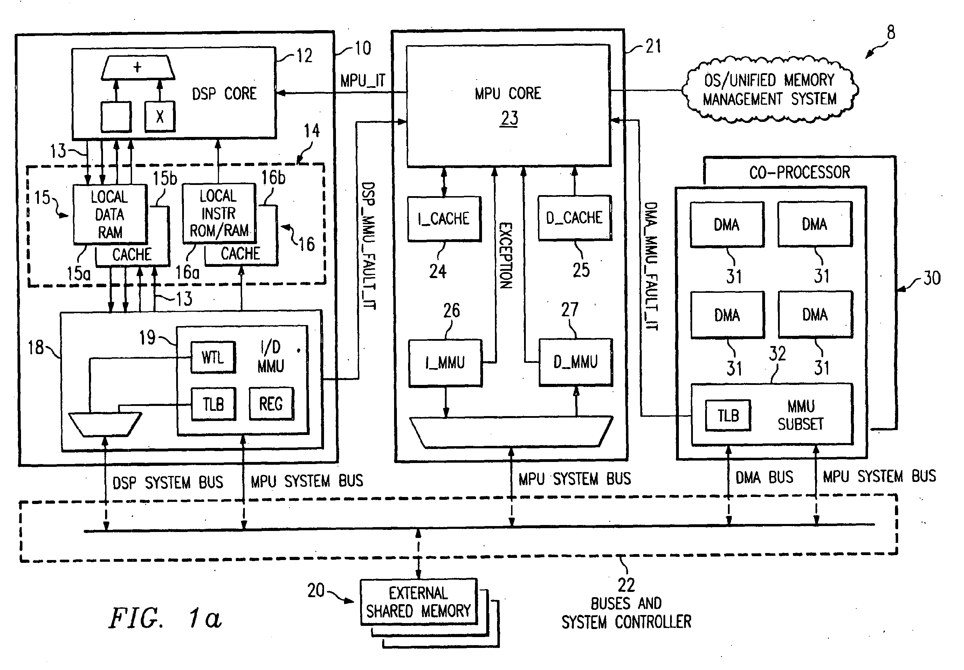

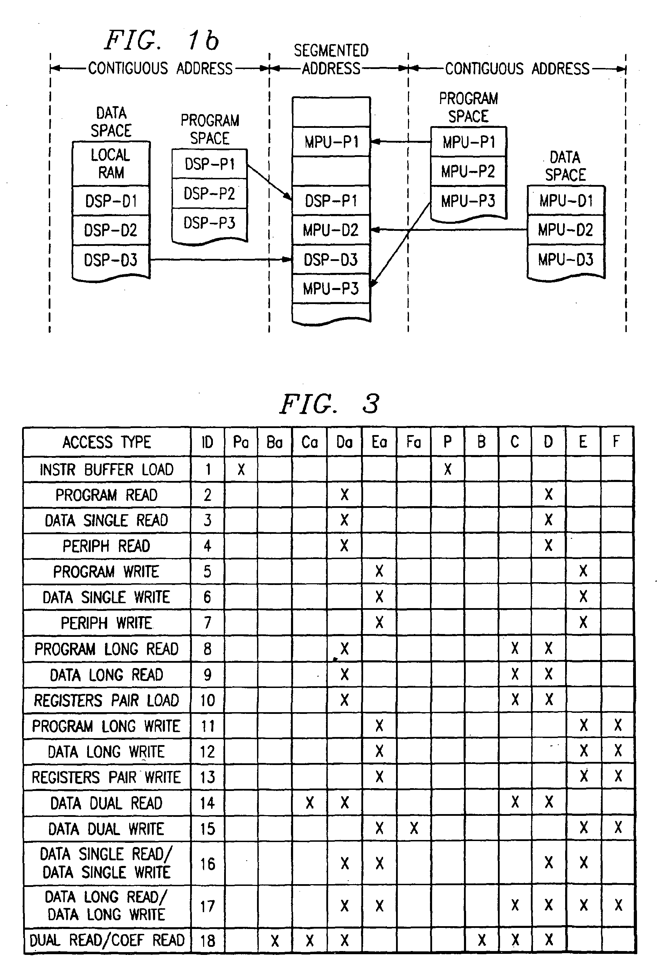

The present invention is best understood in relation to Figures 1 - 8 of the drawings, like numerals being used for like elements of the various drawings.

Figure 1a illustrates a general block diagram of a computing device 8 including an improved architecture using DSPs, co-processors and micro-processing units. In this embodiment, the DSP 10 includes a processing core 12 and a plurality of buses 13 coupled to local memory 14, including a data memory (RAM 15a and/or data cache 15b) along with instruction memory 16 (RAM/ROM 16a and/or instruction cache 16b). An external memory interface 18, including MMU (memory management unit) 19 is coupled to buses 13 and to an external physical memory 20 through external bus and memory controller 22.

One or more other processing units (MPUs) 21, external to the DSP 10, are also coupled to memory 20 through external bus and memory controller 22. The processor unit 21, among other tasks, executes the operating system (OS) which supervises the software and hardware of the device 8. The operating system, through processor unit 21, includes a unified memory management system which can control aspects of the MMU 19 to control logical to physical address translation and memory protection, as described in greater detail hereinbelow. Processing unit 21 includes a core 23, instruction cache 24, data cache 25, an instruction memory management unit (MMU) 26 and a data memory management unit (MMU) 27.

One or more co-processors 30 and DMA channels 31 may also be present in the system 8. The co-processors 30 and DMA channels 31 each include an MMU 32 which interfaces with the external shared memory 20 through bus and memory controller 22. As in the case of DSP 10, the unified memory management system of the operating system can control aspects of the physical address translation and memory protection of the MMUs 32 associated with each device.

In operation, the processor core 12 of the DSP can be of any suitable design. Typically, the processing core of a DSP features a high-speed multiplier accumulator circuit (commonly referred to as a "MAC"). The local memory 14 stores data and instructions used in DSP operations. In the illustrated embodiment, the processing core 12 can directly address the local memory 14 using direct address decoding on its virtual addressing for high-speed access. The bus structure is designed to efficiently retrieve and store program and data information from or in local memories 15a/16a or caches 15b/16b; however, different bus structures could also be used. Alternatively, the local memory 14 could be addressed through an MMU, although this would reduce the speed of local memory accesses.

The external memory interface 18 provides the processing core 12 of DSP 10 with the ability to use virtual addressing to access the external memory 20. DSP core 12 accesses the external memory through the MMU 19. DSPs typically include one or more address generation units (AGUs) to perform one or more address calculations per instruction cycle, in order to retrieve instructions and to retrieve and store operands.

The ability to use virtual addressing significantly increases the functionality of a DSP. In particular, a DSP can run independent tasks in a task protected environment. Linear (contiguous) memory space can be allocated to each task, giving the illusion that each task is the only task running in the system. This is key in future systems, as most software will be written by third parties and will not be aware of the other applications. The MMU 18 also provides the capability to extend the addressing range of the DSP 10 from twenty four to thirty-two bits.

The user of virtual addressing also benefits co-processors 30 and DMA channels 31. For a co-processor, running in virtual memory simplifies the drivers. For instance, DMA over multiple pages can be associated with buffer made of scattered pages with the need to be split in several physical DMAs. This is hidden in the translation table management done by the OS for all the system activities. Accordingly, by controlling the translation table, discussed in greater detail below, the need for a complicated software driver for the co-processor 30 or DMA channel 31 is eliminated.

In the illustrated embodiment, the processing unit 21 in conjunction with the operating system provides a unified memory management system which manages and allocates memory dynamically to the different processes running on each processor, co-processor or DSP, providing a linear and protected memory space to all applications (processes). This unified memory management unit provides a linear memory space for all process and all processors (or co-processors and DMAs) despite the non-linear aspect of the corresponding physical addresses in the external shared memory 20. The unified memory management system can also provide an efficient and well-known protection mechanism.

This is particularly important in today's computing environment where applications are changing rapidly and are developed by independent companies and individual people. All of these different processes are unaware of other processes, which may be executing concurrently. The same phenomenon is occurring in embedded system design, such as communication devices, where applications will also come from the Internet or another global network.

In Figure 1a, the operating system, running on the master processing unit 21, has the responsibility for memory management of the entire system 8. The architecture shown in Figure la provides a mechanism to manage, in a simple manner, the memory segmentation occurring in a dynamic system. The present invention allows independent applications to have a contiguous view of their allocated memory without having to worry about other running applications.

As can be seen in Figure 1b, using virtual addressing, devices in the system can see a contiguous memory space in which to execute their applications. The actual mapping to the external memory 21, however, can be segmented, providing more flexible allocation of the external memory 20.

Each processor (such as DSP 10, processing unit 21 or co-processor 30) can execute its own operating system or real time operating system (RTOS) or even a more basic scheduling function. The processing unit 21 executes the master operating system, including the unified memory management software module. The memory management software module manages several tables containing translations from virtual to physical address and memory protection information.

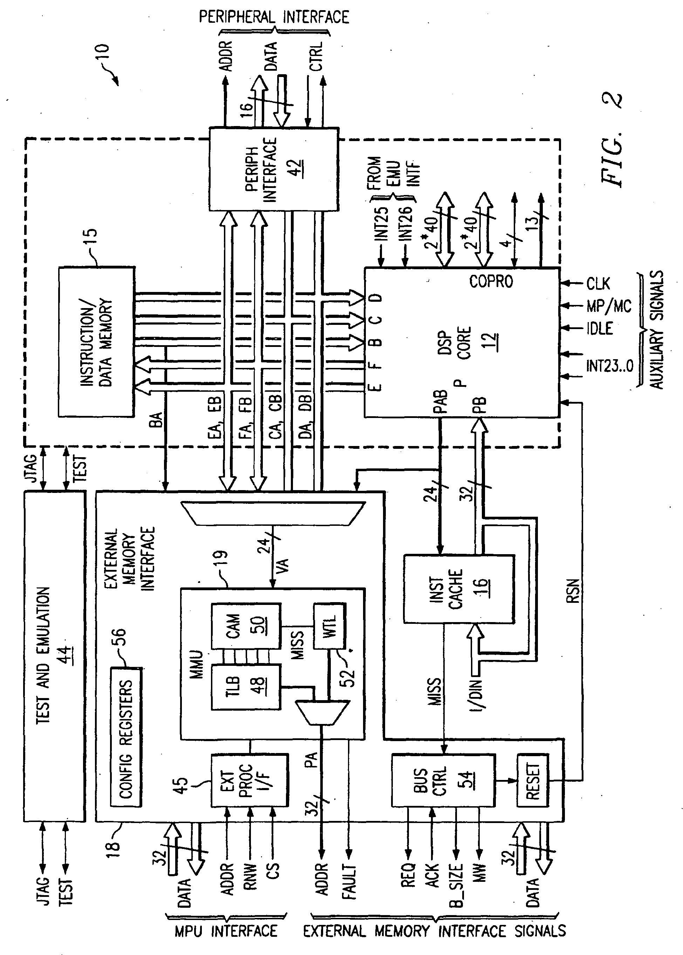

A more detailed description of an embodiment for the DSP 10 is shown in Figure 2. In addition to the DSP core 12, local data memory 15, local instruction memory 16 and external memory interface 18, the DSP includes a peripheral interface 42, a test and emulation interface 44, and an external processing interface 45. The external memory interface 18 includes an MMU 19 with a translation lookaside buffer (TLB) 48, including a content addressable memory (CAM) 50, and walking table logic (WTL) 52. The external memory interface 18 further includes a bus controller 54, and configuration registers 56.

In operation, the DSP 10 communicates via five interfaces. The external memory interface provides thirty-two bits (byte) address capability for burst or single accesses to an external memory space shared between DSP program and data (and with other processing units). A DSP peripheral interface allows access to peripherals specific to the DSP in I/O space. An auxiliary signals interface regroups reset, clock and interface signals. A test and emulation interface allows test signals and JTAG signals for testing the DSP 10. The external processor interface 45 allows an external processing unit 21 to access information stored in the MMU 19 to control the operation of the MMU 19. The external memory interface 18 controls data and instruction transfers between the DSP 10 and an external memory 20. The external memory interface 18 performs two functions: (1) external memory management, (2) priority handling between multiple DSP buses (labeled C, D, E, F, and P) for external access and cache fill requests.

Figure 3 illustrates the use of the different buses for each type of instruction from the DSP core 12.

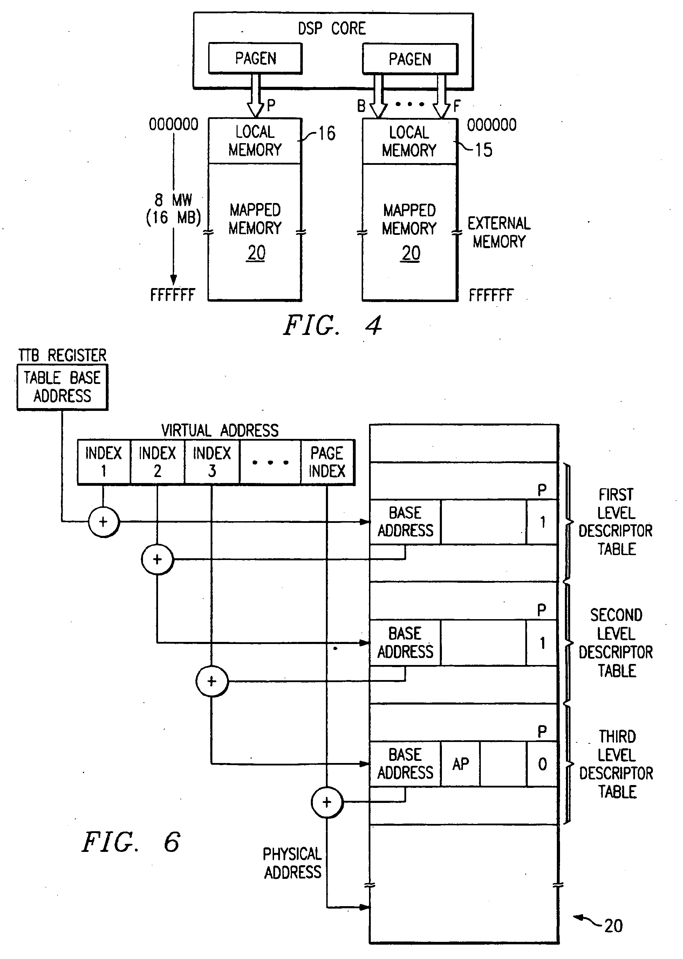

Figure 4 illustrates the virtual program and data space. In the illustrated embodiment of Figure 4, the core 12 sees a uniform 16 Mbyte virtual program space accessed through the P bus. The core 12 accesses 16 Mbytes of contiguous virtual data space through B, C, D, E, F buses, each bus providing its own word address (23 bits). An additional low order bit enables the selection of a byte in a 16-bit data word. A high order D/P bit indicates whether the word is associated with program or data, where data and program buses are multiplexed to an external memory. All buses 13 are 16 bits wide. Sixteen KWords of dual access data RAM (the local data memory 15a) are mapped at the low-end of the address range. The local program memory 16 mapped at the low-end of the program address range can be a RAM/ROM or a cache for storing information (program and data) from the external memory 20.

In the illustrated embodiment, the processing core 12 can directly address the local memory 14 (i.e., without using the MMU 19) within the 16 Mbyte virtual address space for high speed access. External memory 20 is accessed through the MMU 19 in the external memory interface 18.

It should be noted that throughout the specification, specific architectural features and detailed sizes for various memories, bus capacities, and so on, are provided, although the design for a particular DSP implementation could be varied. For example, the size of the virtual program space seen by the core 12 is a design choice, which easily be varied as desired for a specific DSP.

Referring again to Figure 2, the external memory interface 18 is a 32 bit interface and it generates six types of accesses:·(1) single 16-bit data read (word), single 32-bit data read (long word), (2) data burst read mx16-bit data, nx32-bit (long word), (3) data write from DSP (single 16-bit, single 32-bit), (4) data burst write (mxl6-bit data, nx32-bit), (5) instruction cache line fill and (6) single instruction fetch. If the DSP has a data cache 15b, a data cache line fill is also supported.

The priority scheme is defined to match DSP software compatibility and avoid pipeline, memory coherency and lockup issues. The priority list is, in the illustrated embodiment, from highest to lowest: (1) E requests, (2) F requests, (3) D requests, (4) C requests and (5) Cache fill / instruction fetch requests. To improve DSP data flows to/from external memory, blocks of sequential data can be transferred in burst by configuring the external memory interface.

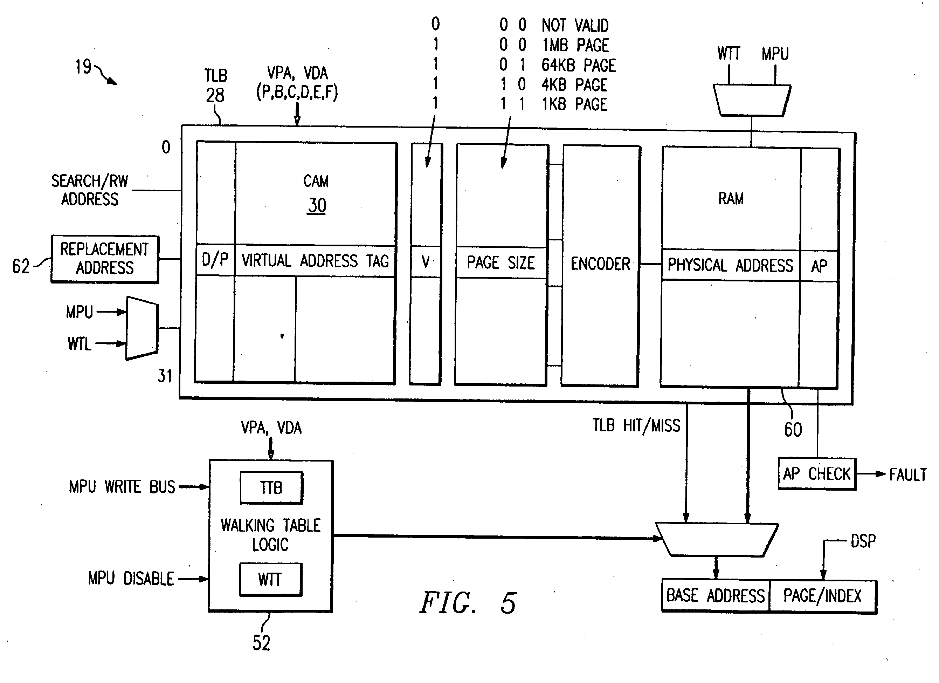

The MMU 19 is shown in greater detail in Figure 5. The MMU 19 performs the virtual address to physical address translations and performs permission checks for access to the external memory interface. The MMU 19 provides the flexibility and security required by an operating system to manage a shared physical space between the DSP 10 and another processing unit.

The MMU includes the TLB 48 and walking table logic 52. In operation, the MMU 19 receives virtual program (instruction) addresses (VPAs) and virtual data addresses (VDAs) from the DSP core 12. The virtual addresses are analyzed by CAM 50 of the TLB 48. If the upper bits of the virtual address are stored within CAM 50, a TLB "hit" occurs. The address in the CAM 50 at which the hit occurred is used to access TLB RAM 60, which stores a physical base address (upper level bits) for each corresponding entry in the CAM 50. Hence, if the virtual address is stored at location "20" of CAM 50, the associated physical address can be obtained from location "20" of RAM 60. The physical base address bits from RAM 60 are then concatenated with page index bits (the lower bits of the virtual address from the DSP core 12) to generate the complete physical address for accessing the external memory 20. In the preferred embodiment, the comparison for each CAM entry is done with the 5, 9, 13, and 15 upper bits of the DSP address, depending upon a page size code (00=1 Mbyte page, 01=64 Kbyte page, 10=4 Kbyte page and 11=1 Kbyte page). Hence, a 1 Mbyte page need only match on the five upper bits, a 64 Kbyte page need only match on the upper nine bits and so on. This is to allow different page sizes to be accommodated by a single CAM; naturally, page sizes other than those shown in Figure 5 could be used in different implementations.

CAM 50 and RAM 60 can store other information on the virtual addresses. RAM 60 stores permission bits (AP) for the virtual address, which can specify, for example, whether a location is read-only or otherwise protected. These bits can be used to control accesses to certain regions of the external memory 20. When the DSP attempts to access an address with inconsistent AP bits (for example, if the DSP attempts to write to a read only section of memory), the external memory interface 18 generates an interrupt DSP_MMU_fault_IT (see Figure 1), which is processed by the unified memory management software module running on the master processing unit 21.

If the virtual address from the DSP core 12 is not found in CAM 50, a TLB "miss" occurs. In this case, the walking table logic 52 is used to find the physical address associated with the virtual address via the MMU tables located in external memory.

Figure 6 shows an example of the derivation of a physical address by the walking table logic in the event of a TLB miss. Walking table logic methods are well known in the art and Figure 6 provides a basic description of the process. The TTB register of the walking table logic 52 holds an address which points to a boundary of a first level descriptor table stored in the external memory 20. The virtual address from the processing core 12 has several index fields, the number and position of which may vary depending upon the page type associated with the virtual address. The translation table base (TTB register) address and indexl from the virtual address are concatenated to identify a location in the first level descriptor table. This location will provide the walking table logic 52 with a base address and a P bit which informs the walking table logic whether the base address points to the physical memory location associated with the virtual address or whether it points to a lower level descriptor table. In the illustration of Figure 6, the location provides a base address to the second level descriptor table in the external memory 20.

This base address is concatenated with index2 from the virtual address to point to a location within the second level descriptor table. The location provides another base address and another P bit. In the illustration, the P bit indicates that the associated base address points to a location in a third level descriptor table. Thus, the base address is concatenated with index3 from the virtual address to point to a location within the third level descriptor table. This location provides a base address and an associated P bit, which indicates that the base address is associated with the desired physical address. The location also includes the permission bits associated with the physical address. Thus, the base address is concatenated with the page index from the virtual address to access the external memory.

It should be noted that while the example uses three descriptor tables to identify the base address of the desired physical address, any number of tables could be used. The number of tables used to determine a physical address may be dependent upon the page size associated with the physical address.

The base address used to form the physical address and the permission bits are stored in the WTT register of walking table logic 52. The WTT register is used to load the CAM 50 with the virtual address and the RAM 60 with the associated base address and permission bits at a location determined by replacement address circuitry 62. Replacement address circuitry 62 generates programmable random addresses or cyclic addresses. The second replacement policy is important when TLB entries are programmed by the MPU on reception of a TLB miss. The replacement policy can in that case also be bypassed and fully under the control of the MPU.

As an alternative to using the walking table logic 72, the TLB 48 of the DSP 10 could be managed by the processing unit 21. The miss signal from the TLB would be sent to the processing unit 21. The interrupt handler on the processing unit 21 would service the interrupt by walking the tables in external memory 20 to find the correct physical address and loading the DSP's TLB 48 appropriately. While this alternative provides greater flexibility in handling TLB misses, it creates additional time dependencies between the DSP 10 and the processing unit 21.

The capability to control the DSP's translation from logical to physical addresses can be used in many ways. Systems using one or more DSPs can be controlled by a master operating system, executed by one or more of the processors 21. The operating system could, for example, assign different tasks to different DSPs in a system and configure the translation tables in memory 20 appropriately. To improve performance, the TLB of each DSP in a system could be preprogrammed by the operating system to minimize misses.

During the operation of the system 8, many applications may be launched and terminated. As new programs are launched, and others terminated, the allocation of memory space in the external memory can become fragmented, leaving unused blocks of memory. The master processing unit 21, under control of the operating system could review the state of the memory, either periodically or upon an event such as an application launch or termination, to determine the degree of fragmentation. If the memory allocations to the currently running applications needed to be changed, the operating system could interrupt the applications, reallocate the memory and change the TLBs in each DSP or co-processor to reflect the new allocations, change the walking table in the external memory and restart the applications.

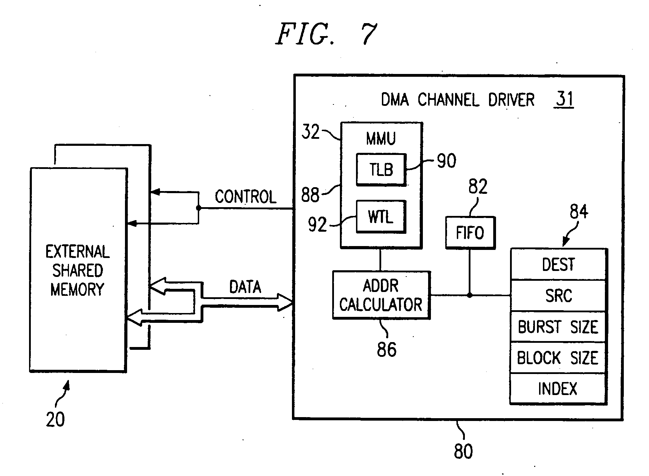

The principle of using an MMU on the DSP can also be extended and applied to using an MMU in conjunction with a DMA channel or co-processor, as is shown in Figure 7. In order to solve the memory segmentation issue, and to avoid locking, a predefined physical memory space is normally reserved for DMA channels. The size required for DMA buffers is not necessary known during initialization. Figure 7 shows a single hardware DMA channel hardware block 80 which can be shared by multiple DMA logical channels through a DMA software driver. The DMA driver 80 is reentrant and creates a new logical channel when an application started by a user requires one, all logical channels are queued within the software driver to share the single DMA physical resource in a time-sliced manner. As the DMA driver will be available to the application though APIs, it is impossible to reserve in advance enough space for all possible logical DMA channels. In defining DMA using virtual addresses, the constraint of reserving a sequential memory space for DMA at initialization is eliminated, since a contiguous block of logical addresses can be mapped to the external memory 21 when it is needed. Despite its segmentation, the pool of available memory can be used to create buffers.

In Figure 7, the DMA hardware block 80 comprises a FIFO (first in, first out) memory 82 (alternatively, a small register file could be used), control registers 84 (including, for example, a destination register, source register, burst size register, block size register, and an index register for complex DMA transfers), address calculator 86 for generating a virtual address, and an MMU 88, including TLB 90 and WTL 92, coupled to the address calculator 86 for generating a physical address to the external memory 20. The architecture of the MMU 88 can be similar to that shown in Figure 5 for the DSP 10.

In operation, the FIFO memory 82 and the control registers 84 represent one physical DMA channel, although several DMA requests could be queued in the associated DMA software driver. The address calculator 86 calculates addresses from the control register 84 for the next data in a similar fashion to convention DMA controllers; however, the addresses calculated by the address calculator 86 are virtual addresses, rather than physical addresses used for normal DMA transfers, and these virtual addresses can be mapped to any available area(s) of the physical memory 20 by the MMU 88.

If the TLB of the MMU has insufficient entries to support all DMAs, a TLB miss is generated. This miss signal can be sent either to the MPU or it can be handled by the WTL 92 as described in connection with the MMU on the DSP. Sending the miss signal to the MPU 21 gives more control to the DMA driver to optimize the usage of the TLB when there is not enough entries. However, this option adds latency on DMAs, but this is less important because DMAs run in parallel with processor. The replacement policy of TLB entry should be a cyclic (FIFO) replacement in the case of a DMA controller. This, of course, is related to the way that logical DMAs are scheduled in time by the DMA controller.

The MMU hardware block can be further simplified in the case of DMA block by removing the WTL and permission check and replacing them by a simple DMA_MMU_Fault_It interrupt signal (see Figure 1). The validity of the translation is always guaranteed by the associated DMA software driver during the DMA programming.

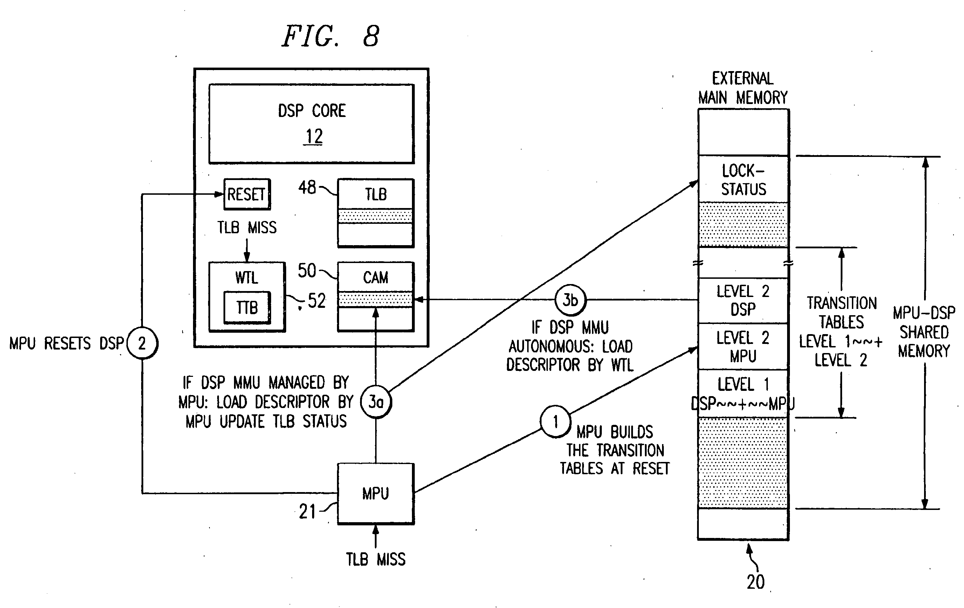

Figure 8 illustrates operations after reset or before a new process is launched on the DSP 10. First, the master processing unit 21 must create the translation table associated to the process targeted for the DSP 10 in the external memory 20. Once the table is ready, the master processing unit 21 can release the DSP 10 from the reset condition or it can signal the RTOS running on the DSP via a mail box mechanism, indicating to the RTOS that it can schedule the new process. The third step depends on how the TLB 48 of the DSP 10 is managed. In the situation when the processing unit 21 is also managing the TLB loading through the interrupt mechanism, the descriptor is loaded by the processing unit 21 to update the TLB status. When the TLB loads itself randomly, the descriptor is loaded automatically via the WTL 52.

Embodiments of the present invention have been discussed in which each processing device in the system has an MMU capable of translating virtual addresses to physical addresses. However, even if one or more devices in the system do not include virtual-to-physical address translation, the unified memory management system could control access to the shared memory by these devices, using access permission and other techniques.

Embodiments of the present invention provide significant advantages over the prior art. With control of the logical to physical address translation an/or access permission using an external processing unit, the operating system allows multiple processing devices to use a shared memory space and more effectively controls the operation of one or more DSPs, co-processors and processing units in a multiprocessor system.

## Claims

1. A multi-processor processing system (8) comprising:
a shared memory (20);
a plurality of processing apparatuses (10, 30) external to said shared memory having respective the multi-processing system being **characterized by** said respective memory management units memory management units (19, 32), translating virtual memory addresses, used internally by the processing apparatuses to access locations in said shared memory, to physical memory addresses corresponding to shared memory locations, where the memory management units each translate according to tables contained in said memory management units; and
by a unified memory management system (21, OS) for allocating a linear memory space of the shared memory to each of a plurality of tasks executed on the processing apparatuses, in order to provide the illusion that each task is the only task running in the multi-precessor processing system.

2. The processing system of claim 1 wherein one or more of said memory management units (19, 32) translate virtual addresses to corresponding physical addresses.

3. The processing system of claim 1 wherein one or more of said memory management units (19, 32) receives physical addresses from a processing core and said unified memory management system performs an access permission check on said physical addresses.

4. The processing system of claim 1 wherein said shared memory contains a translation table which may be accessed by said memory management units (19, 32) for translating virtual addresses to corresponding physical addresses.

5. The processing system of claim 4 wherein said unified memory management system can control access to said translation table by each memory management unit (19, 32).

6. The processing system of claim 1 wherein said processing apparatuses (10, 30) each include one or more microprocessors.

7. The processing system of claim 6 wherein one of said processing devices (10, 30) can controls the memory management units of another of said processing devices via an external processor interface (45) on said another processing device.

8. The processing system of claim 1 wherein one of said processing apparatuses (10, 30) includes one or more digital signal processors.

9. The processing system of claim 1 wherein one of said processing apparatuses (10, 30) includes one or more co-processors.

10. The processing system of claim 1 wherein one of said processing apparatuses include one or more DMA channels.

11. A method of operating a multi-processor processing system comprising the steps of:
providing a shared memory (20);
providing a plurality of processing apparatuses (10, 30) external to said shared memory having respective memory management units (19, 32) for translating virtual memory addresses, used internally by the processing apparatuses to access locations in said shared memory, to physical memory addresses corresponding to shared memory locations, where the memory management units each translate according to tables contained in said memory management units; and
allocating a linear memory space of the shared memory to each of a plurality of tasks executed on the processing apparatuses, in order to provide the illusion that each task is the only task running in the multi processor processing system.

12. The method of claim 11 wherein said step of providing a plurality of processing devices comprises the step of providing one or more processing apparatuses having memory management units (19, 32) which translate virtual addresses to corresponding physical addresses.

13. The method of claim 11 wherein said step of providing a plurality of processing apparatuses comprises the step of providing one or more processing apparatuses having memory management units(19, 32) which receive physical addresses from a processing core and said unified memory management system performs an access permission check on said physical addresses.

14. The method of claim 11 wherein said shared memory contains a translation table which may be accessed by said memory management units (19, 32) for translating virtual addresses to corresponding physical addresses and said unified memory management system controls access to said translation table.

15. The method of claim 11 wherein said step of providing processing apparatuses (10, 30) comprises the step of providing one or more microprocessors.

16. The method of claim 15 wherein said step of providing processing apparatuses (10, 30) comprises the step of providing one or more digital signal processors.

17. The method of claim 15 wherein said step of providing processing apparatuses (10, 30) comprises the step of providing one or more co-processors.

18. The method of claim 15 wherein said step of providing processing apparatuses (10, 30) comprises the step of providing one or more DMA channels.

19. The processing system of any one of claims 1-10 or the method of any one of claims 11-18, wherein the unified memory management system enables extending the addressing range of at least one of said processing apparatuses from 24 to 32 bits.

20. The processing system of any one of claims 1-10 or the method of any one of claims 11-18, wherein the unified memory management system manages and allocates memory in the shared memory dynamically to the different processes running on each processing apparatus.

21. The processing system of any one of claims 1-10 or the method of any one of claims 11-18, wherein the unified memory management system provides a linear space for all processors in the processing apparatuses despite the non-linear aspect of the corresponding physical addresses in the shared memory.

22. The processing system of any one of claims 1-10 or the method of any one of claims 11-18, wherein an interrupt handler in the unified memory management system is enabled to service an interrupt by walking tables in external in shared memory to find the correct physical address.

23. The processing system any one of claims 1-10 or the method of any one of claims 11-18, wherein independent applications have a contiguous view of their allocated memory without considering other running applications.

24. The processing system of any one of claims 1-10 or the method of any one of claims 11-18, wherein each processing apparatus executes its own operating system or real time operating system (RTOS) or even a more basic scheduling function.

25. The processing system or the method of claim 26, wherein the unified memory management system executes a master operating system.

26. The processing system of any one of claims 1-10 or the method of any one of claims 11-18, wherein the unified memory management system manages several tables containing translations from virtual to physical address and memory protection.

## Patentansprüche

1. Eine Multiprozessorverarbeitungsanordnung (8) bestehend aus :
einem gemeinsamen Speicher (20) ;
einer Vielzahl von Verarbeitungsvorrichtungen (10, 30), die außer des gemeinsamen Speichers sind, und die jeweilige Speicherverwaltungssystemen (19, 32) haben, die Multiprozessorverarbeitungsanordnung wird durch die o.g jeweiligen Speicherverwaltungssystemen gekennzeichnet und übersetzt die virtuellen Speicheradressen, die innen von den Verarbeitungsvorrichtungen benutzt werden, um Lage in dem o.g gemeinsamen Speicher zuzugriffen, zu physischen Speicheradressen, die den gemeinsamen Speicherlagen entsprechen, wobei die Speicherverwaltungssystemen nach Tabellen übersetzen, die in den o.g. Speicherverwaltungssystemen enthaltet werden; und
durch ein vereinheitlichtes Speicherverwaltungssystem (21, OS), um eine lineare Speicherkapazität des gemeinsamen Speichers zu jeder einer Vielzahl von Tasken zuzuteilen, welche Tasken auf den Verarbeitungsvorrichtungen ausgeführt werden, um die Illusion zu geben, dass jeder Task der einzige Task ist, der in die Multiprozessorverarbeitungsanordnung lauft.

2. Die Verarbeitungsanordnung nach Anspruch 1, wobei ein oder mehr von den Speicherverwaltungssystemen (19, 32) virtuelle Adressen zu entsprechenden physischen Adressen übersetzt.

3. Die Verarbeitungsanordnung nach Anspruch 1, wobei ein oder mehr von den Speicherverwaltungssystemen (19, 32) virtuelle Adressen von einem Verarbeitungskern empfängt und das vereinheitlichte Speicherverwaltungssystem führt eine Zugangszulassungsprüfung auf den o.g physischen Adressen aus.

4. Die Verarbeitungsanordnung nach Anspruch 1, wobei der gemeinsame Speicher eine Übersetzungstabelle enthalt, welche Tabelle von den o.g. Speicherverwaltungssystemen (19, 32) zugegriffen werden kann, um virtuelle Adressen zu entsprechenden physischen Adressen zu übersetzen.

5. Die Verarbeitungsanordnung nach Anspruch 4, wobei das vereinheitlichte Speicherverwaltungssystem den Zugriff zu der Übersetzungstabelle durch jedes Speicherverwaltungssystem (19, 32) ansteuern kann.

6. Die Verarbeitungsanordnung nach Anspruch 1, wobei jede der Verarbeitungsvorrichtungen (10, 30) einen oder mehr Mikroprozessoren enthalten.

7. Die Verarbeitungsanordnung nach Anspruch 6, wobei eine der Verarbeitungsvorrichtungen (10, 30) die Speicherverwaltungssystemen von einer anderen der Verarbeitungsvorrichtungen durch ein außeres Prozessorinterface (45) auf der o.g anderen Verarbeitungsvorrichtung ansteuern kann.

8. Die Verarbeitungsanordnung nach Anspruch 1, wobei eine der o.g Verarbeitungsvorrichtungen (10, 30) einen oder mehr digitalen Signalprozessoren einschließt.

9. Die Verarbeitungsanordnung nach Anspruch 1, wobei eine der o.g Verarbeitungsvorrichtungen (10, 30) einen oder mehr Co-Prozessoren einschließt.

10. Die Verarbeitungsanordnung nach Anspruch 1, wobei eine der o.g Verarbeitungsvorrichtungen (10, 30) einen oder mehr DMA-Kanalen einschließt.

11. Ein Verfahren von dem Betrieb einer Multiprozessorverarbeitungsanordnung, die aus den folgenden Schritten besteht:
die Lieferung eines gemeinsamen Speichers (20);
die Lieferung einer Vielzahl von Verarbeitungsvorrichtungen (10, 30), die außer des gemeinsamen Speichers sind, und die jeweilige Speicherverwaltungssystemen (19, 32) haben, für die Übersetzung von virtuellen Speicheradressen, die innen von den Verarbeitungsvorrichtungen benutzt werden, um Lage in dem o.g gemeinsamen Speicher zuzugriffen, zu physischen Speicheradressen, die den gemeinsamen Speicherlagen entsprechen, wobei die Speicherverwaltungssystemen nach Tabellen übersetzen, die in den o.g. Speicherverwaltungssystemen enthaltet werden; und
die Zuteilung von einer linearen Speicherkapazität des gemeinsamen Speichers zu jeder einer Vielzahl von Tasken, welche Tasken auf den Verarbeitungsvorrichtungen ausgeführt werden, um die Illusion zu geben, dass jeder Task der einzige Task ist, der in die Multiprozessorverarbeitungsanordnung lauft.

12. Das Verfahren nach Anspruch 11, wobei der Schritt von der Lieferung einer Vielzahl von Verarbeitungsvorrichtungen aus dem Schritt von der Lieferung einer oder mehr Verarbeitungssvorrichtungen mit Speicherverwaltungssystemen (19, 32) besteht, die virtuelle Adressen zu entsprechenden physischen Adressen übersetzen.

13. Das Verfahren nach Anspruch 11, wobei der Schritt von der Lieferung einer Vielzahl von Verarbeitungsvorrichtungen aus dem Schritt von der Lieferung einer oder mehr Verarbeitungsvorrichtungen mit Speicherverwaltungssystemen (19, 32) besteht, die virtuelle Adressen von einem Verarbeitungskern empfangen und das vereinheitlichte Speicherverwaltungssystem führt eine Zugangszulassungsprüfung auf den o.g physischen Adressen aus.

14. Das Verfahren nach Anspruch 11, wobei der gemeinsame Speicher eine Übersetzungstabelle enthalt, welche Tabelle von den o.g. Speicherverwaltungssystemen (19, 32) zugegriffen werden kann, um virtuellen Adressen zu entsprechenden physischen Adressen zu übersetzen und das o.g vereinheitlichte Speicherverwaltungssystem steuert den Zugriff zu der o.g Übersetzungstabelle an.

15. Das Verfahren nach Anspruch 11, wobei der Schritt von der Lieferung von Verarbeitungsvorrichtungen (10, 30) aus dem Schritt von der Lieferung von einem oder mehr Mikroprozessoren besteht.

16. Das Verfahren nach Anspruch 11, wobei der Schritt von der Lieferung von Verarbeitungsvorrichtungen (10, 30) aus dem Schritt von der Lieferung von einem oder mehr digitalen Signalprozessoren besteht.

17. Das Verfahren nach Anspruch 11, wobei der Schritt von der Lieferung von Verarbeitungsvorrichtungen (10, 30) aus dem Schritt von der Lieferung von einem oder mehr Co-Prozessoren besteht.

18. Das Verfahren nach Anspruch 11, wobei der Schritt von der Lieferung von Verarbeitungsvorrichtungen (10, 30) aus dem Schritt von der Lieferung von einem oder mehr DMA-Kanalen besteht.

19. Die Verarbeitungsanordnung nach Ansprüchen 1 - 10 oder das Verfahren nach Ansprüchen 11 - 18, wobei das vereinheitlichte Speicherverwaltungssystem die Erweiterung des Adressenbereichs von mindestens einer der o.g. Verarbeitungsvorrichtungen von 24 bis 32 Bits ermöglicht.

20. Die Verarbeitungsanordnung nach Ansprüchen 1 - 10 oder das Verfahren nach Ansprüchen 11 - 18, wobei das vereinheitlichte Speicherverwaltungssystem den Speicher in dem gemeinsamen Speicher dynamisch zu den verschiedenen Prozessen regelt und zuteilt, welche Prozessen in jeder Verarbeitungsvorrichtung laufen.

21. Die Verarbeitungsanordnung nach Ansprüchen 1 - 10 oder das Verfahren nach Ansprüchen 11 - 18, wobei das vereinheitlichte Speicherverwaltungssystem eine lineare Speicherkapazität für jeden Prozessor in den Verarbeitungsvorrichtungen trotz des nichtlinearen Bildes der entsprechenden physischen Adressen in dem gemeinsamen Speicher liefert.

22. Die Verarbeitungsanordnung nach Ansprüchen 1 - 10 oder das Verfahren nach Ansprüchen 11 - 18, wobei eine Unterbrechungsabwicklungsanordnung in dem vereinheitlichten Speicherverwaltungssystem aktiviert wird, um eine Unterbrechung unterzuhalten, indem sie die Tabelle in dem außeren gemeinsamen Speicher geht, um die korrekte physische Adresse zu finden.

23. Die Verarbeitungsanordnung nach Ansprüchen 1 - 10 oder das Verfahren nach Ansprüchen 11 - 18, wobei unabhängige Anwendungen eine angrenzende Ansicht ihres zugeteilten Speichers, ohne an den anderen laufenden Anwendungen zu denken.

24. Die Verarbeitungsanordnung nach Ansprüchen 1 - 10 oder das Verfahren nach Ansprüchen 11 - 18, wobei jede Verarbeitungsvorrichtung sein eigenes Betriebssystem oder Echtzeitbetriebssystem (RTOS) oder Grunddispositivefunktion ausführt.

25. Die Verarbeitungsanordnung oder das Verfahren nach Anspruch 24, wobei das vereinheitlichte Speicherverwaltungssystem ein Masterbetriebssystem ausführt.

26. Die Verarbeitungsanordnung nach Ansprüchen 1 - 10 oder das Verfahren nach Ansprüchen 11 - 18, wobei wobei das vereinheitlichte Speicherverwaltungssystem mehrere Tabelle leitet, die Übersetzungen von virtuellen zu physischen Adressen und Speicherschutz enthalt.

## Revendications

1. Un arrangement de traitement multiprocesseur (8) comprenant :
une mémoire partagée (20) ;
une pluralité d'appareils de traitement (10, 30) à l'extérieur de ladite mémoire partagée ayant les unités de gestion de mémoire (19, 32), l'arrangement multiprocesseur étant **caractérisé par** lesdites unités de gestion de mémoire respectives (19, 32) qui traduisent les adresses de mémoire virtuelle, utilisées intérieurement par les appareils de traitement pour accéder les positions dans ladite mémoire partagée, aux adresses de mémoire physiques qui correspondent aux positions de mémoires partagées, où chaque unité de gestion de mémoire traduit selon les tableaux contenus dans lesdites unités de gestion de mémoire ; et
par un système de gestion de mémoire unifié (21, OS) pour distribuer un espace linéaire de mémoire de ladite mémoire partagée à chacune d'une pluralité de tâches exécutées sur les appareils de traitement, pour donner l'illusion que chaque tâche est la seule tâche fonctionnant dans le système de traitement multiprocesseur.

2. Le système de traitement selon la revendication 1, où une ou plus desdites unités de gestion de mémoire (19, 32) traduit les adresses virtuelles aux adresses correspondantes physiques.

3. Le système de traitement selon la revendication 1, où une ou plus desdites unités de gestion de mémoire (19, 32) reçoit des adresses physiques d'un noyau de traitement et ledit système de gestion de mémoire unifié exécute un contrôle pour le permis d'accéder sur lesdites adresses physiques.

4. Le système de traitement selon la revendication 1, où ladite mémoire partagée contient un tableau de traduction qui peut être accédé par lesdites unités de gestion de mémoire (19, 32) pour traduire des adresses virtuelles aux adresses correspondantes physiques.

5. Le système de traitement selon la revendication 4, où le système de gestion de mémoire unifié peut contrôler l'accès audit tableau de traduction par chaque unité de gestion de mémoire (19, 32).

6. Le système de traitement selon la revendication 1, où chaque appareil de traitement (10, 30) comprend un ou plusieurs microprocesseurs.

7. Le système de traitement selon la revendication 6, où un desdits appareils de traitement (10, 30) peut contrôler les unités de gestion de mémoire d'un autre desdits appareils de traitement par une interface processeur externe (45) sur ledit autre appareil de traitement.

8. Le système de traitement selon la revendication 1, où un desdits appareils de traitement (10, 30) comprend un ou plusieurs processeurs de signal numérique.

9. Le système de traitement selon la revendication 1, où un desdits appareils de traitement (10, 30) comprend un ou plusieurs coprocesseurs.

10. Le système de traitement selon la revendication 1, où un desdits appareils de traitement comprend un ou plusieurs canaux DMA.

11. Une méthode de faire fonctionner un système de traitement multiprocesseur comprenant les étapes de :
fournir une mémoire partagée (20) ;
fournir une pluralité d'appareils de traitement (10, 30) à l'extérieur de ladite mémoire partagée ayant des unités de gestion de mémoire (19, 32) respectives pour traduire les adresses de mémoire virtuelles, utilisées intérieurement par les appareils de traitement pour accéder les positions dans ladite mémoire partagée, aux adresses de mémoire physiques qui correspondent aux positions de mémoire partagée, où chaque unité de gestion de mémoire traduit selon les tableaux contenus dans lesdites unités de gestion de mémoire ; et
distribuant un espace linéaire de mémoire de ladite mémoire partagée à chacune d'une pluralité de tâches exécutées sur les appareils de traitement, pour donner l'illusion que chaque tâche est la seule tâche fonctionnant dans le système de traitement multiprocesseur.

12. La méthode selon la revendication 11, où ladite étape de fournir une pluralité d'appareils de traitement comprend l'étape de fournir un ou plus d'appareils de traitement ayant des unités de gestion de mémoire (19, 32) qui traduit les adresses virtuelles aux adresses physiques correspondantes.

13. La méthode selon la revendication 11, où ladite étape de fournir une pluralité d'appareil de traitement comprend l'étape de fournir un ou plus d'appareils de traitement ayant des unités de gestion de mémoire (19, 32) qui reçoivent les adresses physiques d'un noyau de traitement et ledit système de gestion de mémoire unifié exécute un contrôle de permis d'accès sur lesdites adresses physiques.

14. La méthode selon la revendication 11, où ladite mémoire partagée contient un tableau de traduction qui peut être accédé par lesdites unités de gestion de mémoire (19, 32) pour traduire des adresses virtuelles aux adresses correspondantes physiques et ledit système de gestion de mémoire unifié limite l'accès audit tableau de traduction.

15. La méthode selon la revendication 11, où ladite étape de fournir les appareils de traitement (10, 30) comprend l'étape de fournir un ou plusieurs microprocesseurs.

16. La méthode selon la revendication 15, où ladite étape de fournir les appareils de traitement (10, 30) comprend l'étape de fournir un ou plusieurs processeurs de signal numérique.

17. La méthode selon la revendication 15, où ladite étape de fournir les appareils de traitement (10, 30) comprend l'étape de fournir un ou plusieurs coprocesseurs.

18. La méthode selon la revendication 15, où ladite étape de fournir les appareils de traitement (10, 30) comprend l'étape de fournir un ou plusieurs canaux DMA.

19. Le système de traitement selon les revendications 1 - 10 ou la méthode des revendications 11-18, où le système de gestion de mémoire unifié permet l'extension de la gamme des adresses d'au moins un des appareils de traitement de 24 à 32 bits.

20. Le système de traitement selon les revendications 1 - 10 ou la méthode des revendications 11-18, où le système de gestion de mémoire unifié contrôle et distribue la mémoire dans la mémoire partagée dynamiquement aux processus différents qui sont exécutés sur chaque appareil de traitement.

21. Le système de traitement selon les revendications 1 - 10 ou la méthode des revendications 11-18, où le système de gestion de mémoire unifié fournit un espace linéaire pour tous les processeurs dans les appareils de traitement malgré l'aspect non-linéaire des adresses physiques correspondantes dans la mémoire partagée.

22. Le système de traitement selon les revendications 1 - 10 ou la méthode des revendications 11-18, où un dispositif pour traiter des interruptions dans le système de gestion de mémoire unifié est activé pour réviser une interruption en parcourant les tableaux à l'externe dans la mémoire partagée pour trouver la vraie adresse physique.

23. Le système de traitement selon les revendications 1 - 10 ou la méthode des revendications 11-18, où les programmes indépendants ont une vue contiguë de leur mémoire assignée sans considérer les autres programmes actifs.

24. Le système de traitement selon les revendications 1 - 10 ou la méthode des revendications 11-18, où chaque appareil de traitement exécute son propre système de commande ou un système de commande en temps réel (RTOS) ou même une fonction de programmation plus élémentaire.

25. Le système de traitement selon la revendication 24, où le système de gestion de mémoire unifié exécute un système de commande maitre.

26. Le système de traitement selon les revendications 1 - 10 ou la méthode des revendications 11-18, où le système de gestion de mémoire unifié contrôle plusieurs tableaux qui contiennent les traductions des adresses virtuelles aux adresses physiques et la protection de mémoire.
